# DEMANDE DE BREVET EUROPEEN

(11) **EP 1 380 772 A1**
(43) Date de publication de la demande: **14.01.2004**
(21) Numéro de dépôt: 02405583.2
(22) Date de dépôt: 10.07.2002
(51) Int. Cl.: F16H 55/16, F16H 35/10

(54) **Engrenage avec protection contre surcharge**

(71) Demandeur: Wiederrecht, Jean-Marc, 1233 Bernex (CH)
(72) Inventeur: Wiederrecht, Jean-Marc, 1233 Bernex (CH)
(74) Mandataire: Gresset, Jean

(57) **Abrégé**

L'invention concerne un engrenage de précision comportant au moins deux roues dentées (10, 14) coopérant l'une avec l'autre.

Les dents (12, 16) des deux roues ont la même épaisseur (e) et les dents (12) de l'une d'elles (10) sont dotées d'une fente radiale (26) qui les divise en deux demi-dents (22, 24). L'une de ces demi-dents (24) comporte un évidement (28) lui permettant de se déformer élastiquement en cas de serrage.

## Description

La présente invention se rapporte au domaine des engrenages. Elle concerne, plus particulièrement, un perfectionnement apporté aux dents des roues d'engrenages, notamment en vue de leur utilisation dans des mécanismes de précision, tels que ceux utilisés en horlogerie.

Les constructeurs horlogers emploient des engrenages présentant un ébat ou un jeu, c'est-à-dire une différence d'épaisseur, entre les dents des roues des deux mobiles coopérant l'un avec l'autre. Cela permet de pallier les éventuels défauts dimensionnels des roues.

Malheureusement, la présence d'ébats dans les engrenages constitue aussi un inconvénient, du fait de l'addition des jeux, lorsqu'il s'agit, notamment dans une montre, d'afficher la seconde ou la minute de manière décentrée. L'aiguille risque fort, alors, de "flotter" sur les marques fixes du cadran. Un tel défaut est particulièrement pénalisant pour les produits « haut de gamme ».

Diverses solutions ont été proposées pour compenser les défauts d'engrenages.

Par exemple, le document FR 2 379 736 propose que les dents de l'un des mobiles soient pourvues d'une fente radiale pratiquée à leur sommet et que cette fente débouche dans un évidement, ce qui les rend élastiquement déformables au moment de leur contact avec les dents opposées de l'autre mobile. Une telle solution souffre cependant du fait que les dents risquent ainsi d'être trop fragilisées et/ou de ne pas avoir une rigidité suffisante pour transmettre, avec un rendement satisfaisant, une énergie importante fournie par un couple élevé. Par ailleurs, ce document est complètement silencieux quant à l'ébat de l'engrenage.

La présente invention a pour but de fournir un engrenage de précision exempt des inconvénients dus à son ébat, tout en étant capable de déformation élastique en cas de serrage mais conservant une rigidité suffisante pour restituer la force transmise avec un rendement optimal.

De façon plus précise, l'invention concerne un engrenage de précision comportant au moins deux roues dentées coopérant l'une avec l'autre, caractérisé en ce que :
- les dents des deux roues ont la même épaisseur,
- les dents de l'une d'elles sont dotées d'une fente radiale qui les divise en deux moitiés, et
- l'une de ces moitiés est évidée de manière à pouvoir se déformer élastiquement en cas de serrage.

D'autres caractéristiques de l'invention ressortiront de la description qui va suivre, faite en regard du dessin annexé dans lequel :
- la figure 1 représente un exemple de réalisation d'un engrenage selon l'invention, et
- la figure 2 est une vue agrandie d'une dent de l'engrenage de la figure 1.

Le dessin montre un engrenage formé d'une roue 10 à quarante cinq dents 12 et d'un pignon 14 à quinze dents 16 coopérant ensemble. Le cercle primitif de ces mobiles est représenté en 18 et leur cercle de pied en 20. Ces mobiles peuvent être réalisés aussi bien en matériau plastique qu'en métal (laiton, ....).

Selon l'invention, l'engrenage est sans ébat - ou sans jeu -, c'est-à-dire que les dents 12 de la roue et les dents 16 du pignon ont la même épaisseur e et la même largeur de vide (pour l'homme de métier, valeurs prises au niveau du cercle primitif 18).

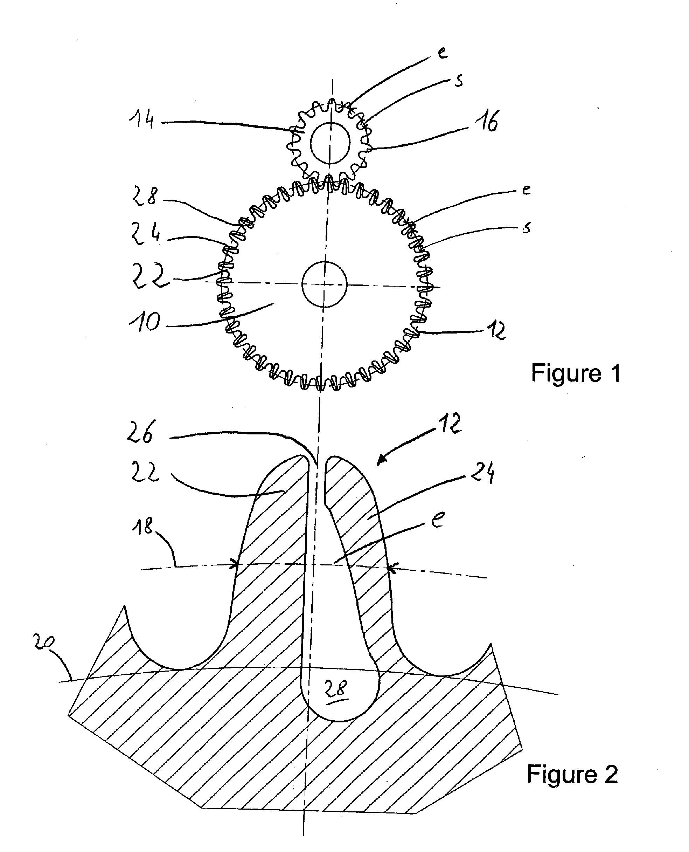

Comme le montre mieux la figure 2, les dents 12 de la roue 10 sont séparées en deux moitiés 22 et 24 par un fente radiale 26, c'est-à-dire formée selon un rayon du mobile.

Dans l'exemple représenté, la fente 26 s'étend légèrement au-delà du cercle de pied 20 et a, au sommet des dents, une largeur correspondant sensiblement à l'ébat qu'aurait l'engrenage s'il était de type classique.

La demi-dent 22 est entière, alors que la demi-dent 24 est affaiblie par un évidement 28 allant en s'élargissant de son sommet vers le cercle de pied 20. Typiquement, l'épaisseur de la demi-dent 24, au niveau du cercle primitif 18, est environ la moitié de celle de la demi-dent 22.

Bien entendu, la présente description n'a été donnée qu'à titre d'exemple. Il va de soi que la longueur et la largeur de la fente radiale 26 ainsi que la forme et la dimension de l'évidement 28 peuvent être adaptées, en fonction de l'application visée, pour permettre la déformation élastique de la demi-dent 24 la mieux appropriée.

Ainsi est réalisé un engrenage sans ébat dans lequel, d'une part, la demi-dent entière 22 possède une rigidité suffisante pour assurer correctement la transmission de forces importantes et, d'autre part, la demi-dent amincie 24 possède une élasticité lui permettant, dans un premier temps, de céder en cas de serrage, puis de transmettre la force après l'appui contre l'autre demi-dent.

## Revendications

1. Engrenage de précision comportant au moins deux roues dentées (10, 14) coopérant l'une avec l'autre, **caractérisé en ce que** :
- les dents (12, 16) des deux roues ont la même épaisseur (e),
- les dents (12) de l'une d'elles (10) sont dotées d'une fente radiale (26) qui les divise en deux demi-dents (22, 24), et
- l'une des demi-dents (24) comporte un évidement (28) lui permettant de se déformer élastiquement en cas de serrage.

2. Engrenage selon la revendication 1, **caractérisé** en ce ladite fente radiale (26) s'étend légèrement au-delà du cercle de pied (20) de la roue.

3. Engrenage selon l'une des revendications 1 et 2, **caractérisé en ce que** ladite fente radiale (26) a, au sommet des dents (12), une largeur correspondant sensiblement à l'ébat qu'aurait l'engrenage s'il était de type classique.

4. Engrenage selon l'une des revendications 1 à 3, **caractérisé en ce que** ledit évidement (28) va en s'élargissant du sommet des dents vers le cercle de pied (20) de la roue.

5. Engrenage selon l'une des revendications 1 à 4, **caractérisé en ce que** l'épaisseur de la demi-dent évidée (24), au niveau du cercle primitif (18) de la roue, est sensiblement la moitié de celle de l'autre demi-dent (22).
